# EUROPEAN PATENT APPLICATION

(11) **EP 0 647 841 A2**
(43) Date of publication of application: **12.04.1995**
(21) Application number: 94402259.9
(22) Date of filing: 07.10.1994
(51) Int. Cl.: G01M 3/24

(54) **Method and apparatus for examining presence or absence of pin holes of bag-shaped products composed of thin type synthetic resin or rubber membranes**

(30) Priority: 08.10.1993 JP 253342/93
(71) Applicant: Watanabe, Yuji, Mitaka-Shi, Tokyo 181 (JP)
(72) Inventor: Watanabe, Yuji, Mitaka-Shi, Tokyo 181 (JP)
(74) Representative: Lepercque, Jean

(57) **Abstract**

It is an object of the present invention to provide a method and an apparatus for examining presence or absence of pin holes of bag-shaped products composed of thin type synthetic resin or rubber membranes.

A product composed of thin synthetic resin or rubber to be subjected to examination for defects is inflated by air, and a ultrasonic wave generated in accordance with an air flow spouting from its pin hole is detected..

As a ultrasonic wave sensor, an electrostritive element capable of sensing a ultrasonic wave of 20 to 100 kHz is recommended.

## Description

### Background of the invention

The present invention relates to a method and an apparatus for examining pin holes of bag-shaped products composed of thin synthetic resin or rubber membranes or films such as for example gloves for operations, packs for blood transfusion, liquid transfusion and the like made of latexes.

Products such as gloves for operation, packs for blood transfusion, liquid transfusion and the like made of latexes may exert unforeseen influences extremely dangerous for users when there are pin holes, admixture of foreign matters such as bubbles and the like. Especially in recent years, medical treatment techniques are highly advanced progressively, and the frequency of use of such products rapidly increases, and hence there is such a tendency that accidents due to their defects frequently occur, so that more strict examination than before is requested.

The examination method adopted at present in Japanese Industrial Standard (JIS T9107 1992) is a water tight property test, in which a cylindrical vessel having a volume of about 1.2 liter, a diameter of about 6 cm and a length of about 40 cm is filled with about 1 liter of water, the end portion of a glove is tightly fixed to its opening portion using a band of an O-ring shape, the vessel is inverted upside down and lifted by a holding tool to be vertical, and presence or absence of water leakage is investigated by visual observation after passage of 2 minutes in a state as it is, which is extremely primitive.

In addition, an electric conductivity test is described in this JIS for a reference. In this method, one electrode of non-polarization electrodes is fixed in an electrolyte solution, a product to be examined is placed in the solution, an electrolyte is also injected into its inside, another electrode of the non-polarization electrodes is inserted, the liquid level at the inside of the product is held to be slightly higher than that at the outside, and an electric resistance is measured after 30 minutes from the immersion of the test article into the solution.

This method has such problems that the test requires a time of at least not less than 30 seconds, and a long time is also required for washing and drying of the product after completion of the test.

In addition, altough there is not prescribed in JIS and the like, a method is widely performed in which air or the like is injected into the inside of the product and then it is immersed in water, and generation of bubbles is observed so as to sense leakage.

However, any of these methods is difficult to be automated, and hence human hands are required for the examination, and they have to rely on a sense and attentiveness of an examiner, so that there are problems that there may be different judgment standards depending on persons, there may be a lot of oversights and the like, and there is a problem that steps of washing, drying and the like are also required after completion of the examination.

### Brief description of the invention

The present invention has been made in order to solve the above-mentionned problems, an object of which is to provide a method and an apparatus capable of examining such products wherein automation is easy, human hands are not required for examination, no human sense is relied on, reliability is high because acceptance or rejection of a product can be judged automatically and objectively, the examination merely takes an extremely short time, it is economical because no step such as washing or the like is required also after the examination, and it is preferred also from a viewpoint of hygiene because of a completely non-contacting system.

The aforesaid object of the present invention can be achieved in such a manner that an ultrasonic wave detector is provided at a position opposing to a face to be examined of a product inflated by air, an ultrasonic wave generation which occurs when a pin hole exists is sensed to detect the presence of the pin hole.

In the meantime, as the ultrasonic wave detector, it is desirable to use one which is provided with an electrostrictive element capable of detecting an ultrasonic wave at a frequency of 20 to 100 kHz.

In addition, it is recommended that such an ultrasonic wave detector is provided in a spouting airflow which occurs when the pin hole is present.

When the product is a rubber glove, it is desirable that the ultrasonic wave detectors are provided at the palm face side, at the back face side of the glove, and in a direction directed by the middle finger, respectively.

Further, in order to detect without fail pin holes between fingers, when this portion is examined, it is desirable to perform examination in such a state that the glove is pressed from the palm face side and the back face side with the fingers being sumewhat widen.

In addition, the frequency for the ultrasonic wave generated in accordance with the spouting flow from the pin hole changes depending on a hardness, elasticity and a thickness of a material constituting the product, a size of the pin hole, a composition, a pressure and a temperature of the gas supplied to the inside and the like, however, provided that the product is not extremely special one, usually it includes 20 to 100 kHz which can be satisfactorily detected by the detector.

In addition, with respect to the gas to be enclosed in the glove, usually compressed air of 0.1 to 0.3 kg/cm² is used, however, in special cases, helium or the like can be used.

### Brief description of the drawings

Details of the present invention will be further explained hereinafter with reference to drawings.

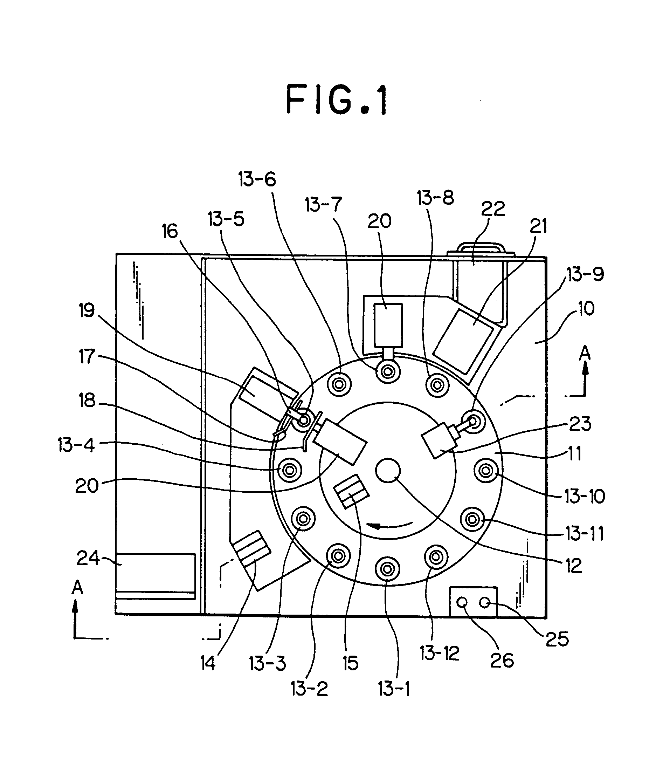

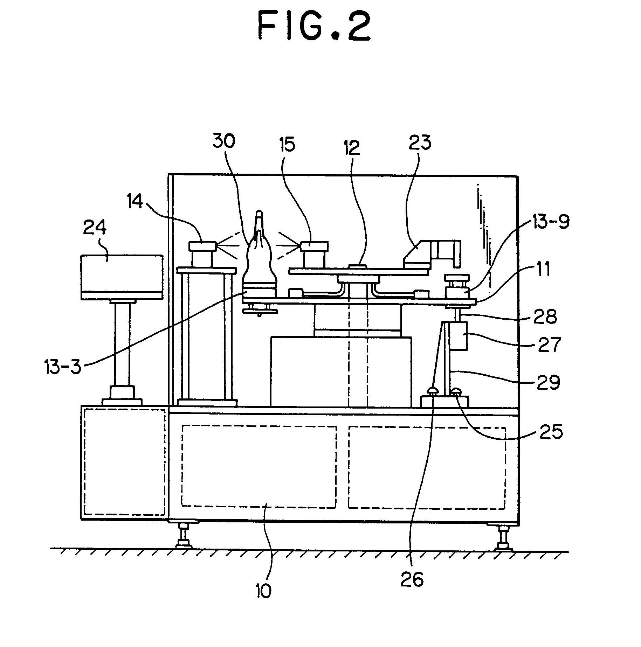

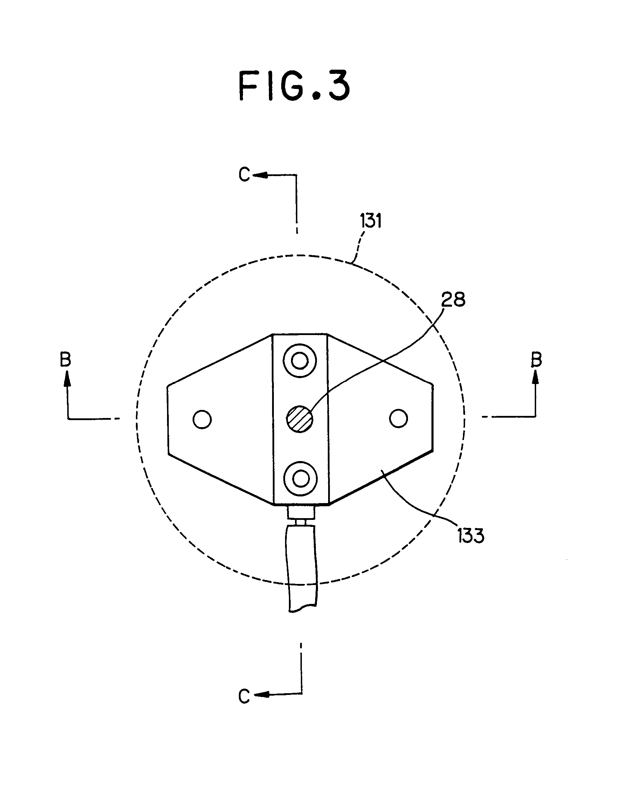

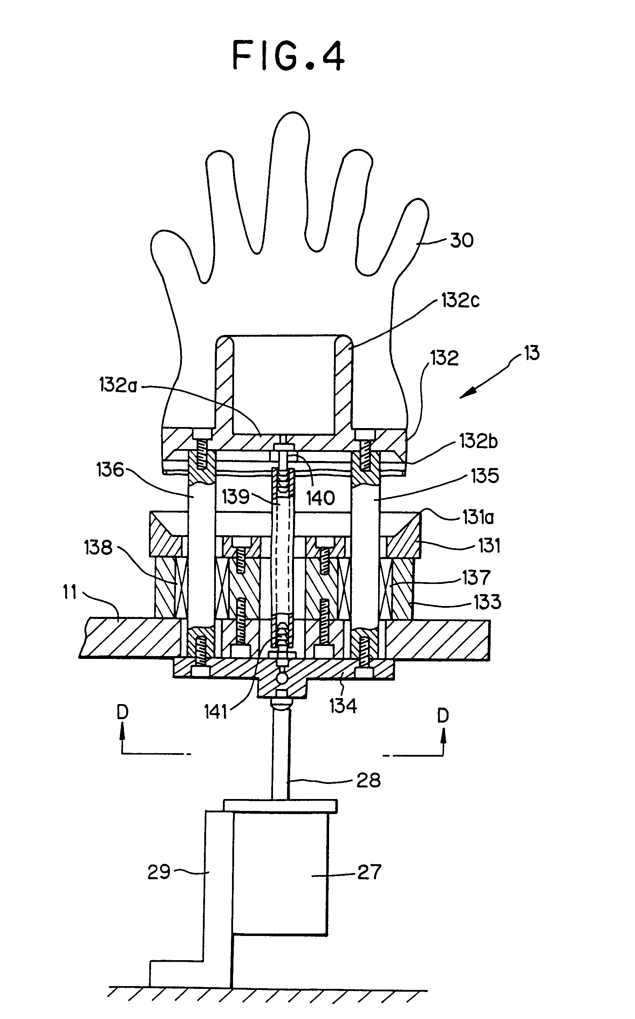

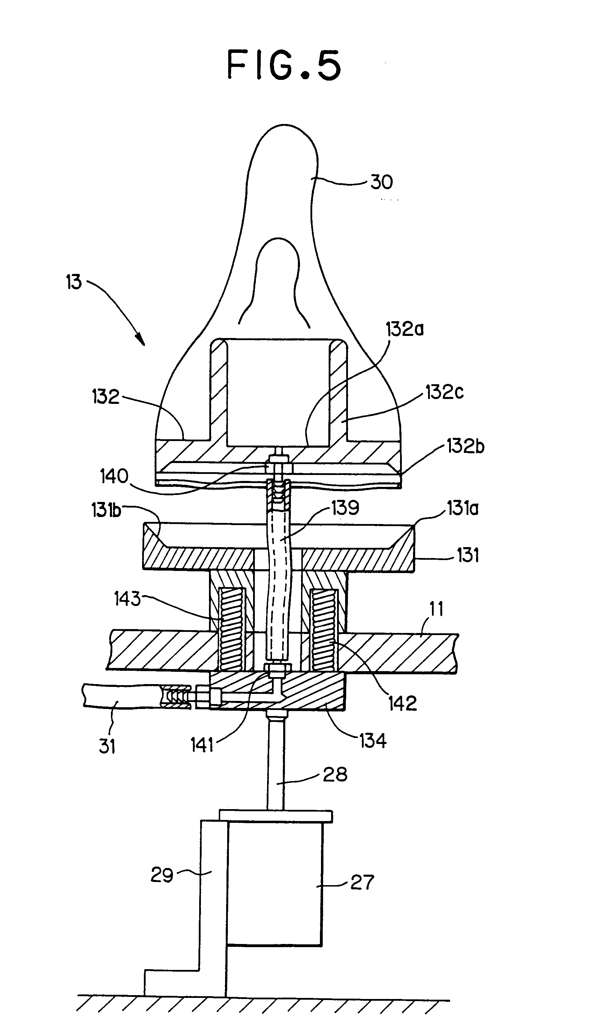

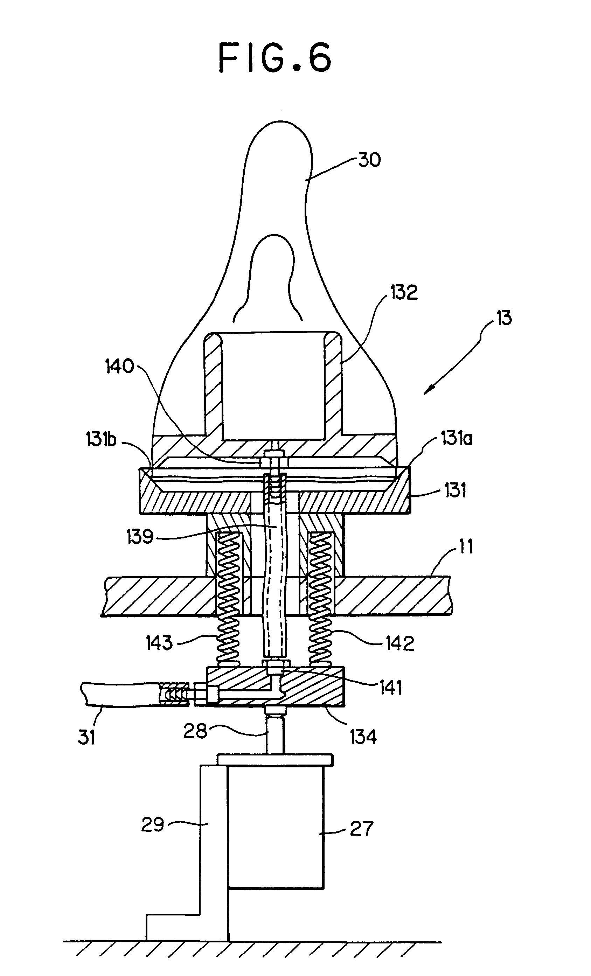

Fig. 1 is a plan view showing one example of an examining apparatus according to the present invention, Fig. 2 is a vertical cross-sectional view showing an A-A cross-section in Fig. 1 of the apparatus, Fig. 3 is a bottom view showing one example of a fastening unit for gloves used in this apparatus, Fig. 4 is a vertical cross-sectional view showing an A-A cross-section of the fastening unit shown in Fig. 3, Fig. 5 is a vertical cross-sectional view showing a B-B cross-section of the fastening unit shown in Fig. 3, and Fig. 6 is a vertical cross-sectional view showing a state in which the fastening unit shown in Fig. 5 fastens a glove.

### Detailed description of the invention

Referring to Fig. 1, 10 is a machine stand, 11 is a rotatable table, 12 is a rotation shaft of the rotatable table 11, 13-1, ...13-i, ...13-12 are stations of fastening units 13 of 12 sets arranged in rotation symetry on the rotatable table 11 using the rotation shaft 12 as the center, 14 and 15 are a pair of ultrasonic wave sensors provided opposite to each other interposing a movement passage of the fastening units 13, 16 is an ultrasonic wave sensor provided directing downwardly just over the movement passage of the fastening units 13, 17 and 18 are plates for pressing the palm face and the back face of a glove attached to the fastening unit 13 and conveyed, 19 and 20 are air cylinders for causing the pressing plates 17 and 18 to move toward and away from the glove respectively, 20 is a unit for making stamping on inferior articles, 21 is a removing unit for inferior articles, 22 is an inferior article recovering box, 23 is a hem folding unit for gloves, 24 is a control panel, and 25 and 26 are operation switches.

In Fig. 2 are shown the stand machine 10, the rotatable table 11, the rotation shaft 12, the fastening units at the two stations 13-3 and 13-9 (illustration of the other fastening units is omitted in order to simplify the figure), the ultrasonic wave sensors 14 and 15, the hem folding unit 23, the control panel 24, and the operation switches 25 and 26 shown in Fig. 1, as well as an air cylinder 27 for operating the fastening unit located at the station 13-9, a rod 28 for the air cylinder 27, and a bracket 29 for supporting the air cylinder 27.

Incidentally, any of the above-mentionned symbols 13-1, 13-2, ...13-i, ...13-12 indicate a specified fastening unit, which is used to indicate the station for the fastening unit. In other words, one fastening unit 13 moves by successively passing through the stations 13-1, 13-2, ...13-i, ...13-12 shown by these symbols.

The rotatable table 11 is supported by the rotation shaft 12, which is rotated clockwise in Fig.1 by means of a driving unit not shown in the figure.

The rotatable table 11 is provided with 12 sets of the fastening units 13-1, 13-2, ...13-i, ...13-12, and along their movement passage are successively provided the ultrasonic wave sensors 14, 15 and 16, a glove pressing unit comprising the pressing plates 17 and 18 and the air cylinders 19 and 20 for controlling them, the inferior article stamping unit 20, the inferior article removing unit 21, and the hem folding unit 23.

A glove to be examined is attached to one fastening unit 13 at the station shown by the symbol 13-1 in Fig. 1, the glove being supplied with air into the inside and inflated, which is conveyed clockwise in the figure by means of the fastening unit in such a state.

With respect to this fastening unit 13, explanation will be made in more detail hereinafter with reference to Fig. 3 to Fig. 6. Herein, assuming that the glove 30 is attached to any one of the fastening units 13 in a state as shown in Fig. 2 and moves together with the fastening unit, the function of this testing apparatus will be explained.

When the fastening unit 13 to which the glove 30 is attached passes through the station shown by the symbol 13-3, it passes between the pair of the ultrasonic wave sensors 14 and 15.

At this time, if there is a pin hole at the palm face or the back face of the glove 30, a ultrasonic wave is generated when air spouts from the pin hole, so that it is possible to know the presence of the pin hole by sensing the ultrasonic wave. The ultrasonic wave may be detected by the ultrasonic wave sensor 14 or 15 existing in a flow direction of a air spouting from the pin hole.

However, only by the ultrasonic wave sensor 14 or 15, it is difficult to detect pin holes existing between fingers. A pin hole existing at such a location is detected when the glove 30 arrives at the station shown by the symbol 13-5. At this position, the glove is interposed between the pair of the pressing plates 17 and 18, which is crushed somewhat strongly. Thus the hand fingers are opened, and portions between the fingers are widened, and if there is a pin hole at such portions, the pin hole is spread and widened, and a spouting air flow is amplified. At this position, the ultrasonic wave sensor 16 is provided over the glove, that is in the direction directed by the middle finger. In other words, the ultrasonic wave sensor 16 is held over the glove with directing downwardly, under which the five fingers of the glove are adapted to be successively passed.

Thus, if there is a pin hole between the fingers, at the finger tip and the like of the glove, the defect can be immediately sensed.

When any one of these ultrasonic wave sensors 14,15 and 16 detects the ultrasonic wave, the control circuit 24 immediately gives warning, which operates the inadequate article stamping unit 20 to make stamping onto the inferior glove when the fastening unit which holds that glove 30 arrives at the position shown by the symbol 13-7, and operates the inferior article removing unit 21 when the fastening unit arrives at the station shown by the symbol 13-8 to detach the inadequate article from the fastening unit and throw it into the inadequate article recovering box 22.

In the meantime, adequate articles in which no generation of the ultrasonic wave is detected are hem-folded by the hem folding unit 23 provided at the station shown by the symbol 13-9, which are removed by an operator at the position shown by the symbol 13-9.

This detecting method is extremely reliable and highly accurate, and according to results of comparing tests with the conventional examining method defined in JIS, it did not occur at all that those regarded as inferior by the conventional examining method defined in JIS could not be detected, and on the contrary, it was confirmed that even inferior articles which were not detected by the conventional examining method of JIS could be certainly detected.

The frequency and the strength of the generated ultrasonic wave changes depending on a material quality and a wall thickness of the glove, an air pressure, a temperature, and a size and a shape of the pin hole, however, in the case of rubber gloves for medical operations, it is recommended to use those having a detecting zone of 20 to 100 kHz as the ultrasonic wave sensor. According to the ultrasonic wave sensor, practically complete detection of pin holes is possible.

In addition, in the case of the above, the three ultrasonic wave sensors are used, each of which is arranged to direct toward the palm face, the back face and the finger tip, however, the number of them may be increased, and for example, every two individuals are used for the palm face, the back face and the fingers respectively so as to arrange with changing the angle, height or zone in some cases, and for example, the glove may be rotated, tilted or raised or lowered in front of the ultrasonic wave sensor in other cases, and on the contrary, it is also possible that the ultrasonic wave sensor is moved to scan the surface of the glove, and in these cases, the number of the ultrasonic sensor can be one or two.

Next, a holding tool for the glove, that is the fastening unit will be explained.
Fig. 3 is a lateral cross-sectional view obtained by cutting along a D-D cutting line in Fig. 4. which is substantially a lower face view of the fastening unit.
Fig. 4 is a cross-sectional view taken along B-B in Fig. 3, which shows a state in which attachment or detachment of the glove is performed.
Fig. 5 and Fig. 6 are cross-sectional views taken along C-C in Fig. 3, wherein Fig. 5 shows a state in which attachment or detachment of the glove is performed, and Fig. 6 shows a state in which the glove is fastened.

The fastening unit 13 comprises a fixed fastener 131, a movable fastener 132, a distance piece 133, a driving plate 134, connecting rods 135 and 136, ball slides 137 and 138, a hose 139, hose joints 140 and 141, compression springs 142 and 143, and other several set screws.

At the position at which attachment or detachment of the glove 30 is performed, the air cylinder 27 is provided under the fastening unit 13. The air cylinder 27 is supported by the bracket 29, and its rod 28 is used to push and raise the driving plate 134.

The fixed fastener 131 is a disk having a dish- shaped cross-section having an edge 131 a at the circumference, which is fixed to the rotatable table 11 through the distance piece 133.

The distance piece 133 is provided with a hole through which the hose 139 penetrates at the center, and interposing the hose penetrating hole, there are provided bearing holes for accomodating the ball slides 137 and 138 respectively and holes for accommodating the compression springs 142 and 143.

The connecting rods 135 and 136 are supported in a manner freely capable of ascending and descending by means of the ball slides 137 and 138 provided at the inside of the distance piece 133, which penetrate through holes provided through the rotatable table 11, and connect the driving plate 134 to the movable fastener 132.

The compression springs 142 and 143 are accommodated within the attachment holes opened downwardly in the distance piece 133, which always exert elastic force in the direction to push and lower the driving plate 134, wherein they are completely compressed and exist at the inside of the attachment holes in a state shown in Fig. 5, that is a state in which the driving plate 134 is pushed and raised by the rod 28 of the air cylinder 27, while they elongate to push and lower the driving plate 134 in a state shown in Fig.6, that is a state in which the rod 28 is pulled and lowered. In such a state, the movable fastener 132 which is connected to the driving plate 134 is also pulled and lowered.

In addition, the driving plate 134 is provided with the hose joint 141 to which the hose 31 for supplying compressed air from the outside is connected, and the compressed air supplied through the hose 31 is sent to the upper face of the movable fastener 132 through an air passage provided at the inside of the driving plate 134 and the hose 139.

The glove 30 is attached to the movable fastener 132 which is constituted by providing a downwardly protuding edge 132b at the circumference of a disk- shaped main body portion 132a, and providing a cylindrical hem folding portion 132c at the center of its upper face. In addition, this movable fastener 132 has the hose joint 140 which communicates with the hose 139.

This movable fastener 132 is connected to the driving plate 134 to raise or lower together with the driving plate 134, and when it is lowered, its edge 132b contacts with a slant face 131 b at the inside of the edge 131a a of the fixed fastener 131.

When the fastening unit 13 arrives at the position 13-1 shown in Fig. 1, the air cylinder 27 provided at the position is operated, and the rod 28 is elongated, so that the driving plate 134 is pushed and raised, and the fastening unit 13 is in the state shown in Fig. 4 and Fig. 5.

In such a state, one glove 30 is put on and attached to the movable fastener 132 by operator's hands. The circumferential length of the main body portion 132a of the movable fastener 132 is considerably longer than a length of the circumference of the hem of the glove 30, and the glove 30 is attached to the movable fastener 132 in a state in which its hem fringe is stretched.

When the rod 28 is pulled into the air cylinder 27 in such a state, the movable fastener 132 is lowered together with the driving plate 134 which receives the elastic force of the compression springs 142 and 143, and the hem of the glove 30 is caught between the movable and fixed fasteners 131 and 132. The hem of the glove 30 is strongly tightened by the elastic force of the compression springs 142 and 143, so that the glove 30 is fastened in an air-tight manner.

In tis state, compressed air of a degree of 0.1 to 0.3 kg/cm² is fed from the hose 31 to thus inflate the glove 30.

This state is continued even when the rotatable table 11 rotates and the fastening unit 13 moves to stations with no air cylinder 27, and a series of tests may be performed. When the tests are completed, and the treatment for inadequate articles is completed, then a changeover valve not shown which is connected to the hose 31 is switched, and the air is drawn out of the glove 30.

When the fastening unit arrives at the station 13-9 shown in Fig. 1, the hem folding unit 23 is operated, and the glove 30 is pushed into the cylindrical hem folding portion 132c of the movable fastener 132, thereby the hem of the glove is folded.

Next, one air cylinder is also provided at the station 13-10 for the fastening unit, and when the fastening unit arrives at the station 13-10, the driving plate 134 is pushed up by the action of the air cylinder, and the glove 30 is removed by operator's hands.

Incidentally, the holding tool for the glove is not limited to this fastening unit, which may be one in which a conventional O-type band is used, and the constitution of the fastening unit is also not limited to the aforesaid example, and for example, the shapes of the fixed fastener 131 and the movable fastener 132 and the method of supporting can be optionally changed, and as the actuator for raising and lowering the movable fastener 132, in addition to the air cylinder, a cam, a lever and a solenoid can be utilized.

In addition, it is a matter of course that this fastening unit may be widely used for examination of not only gloves but also finger sacks, condom and the like.

The present invention is constituted as described above, so that according to the present invention, it is possible to provide the method and the apparatus which is easily automated, no human hand is required for the examination, no human sense is relied on, and acceptance or rejection of the product can be judged mechanically and objectively, so that the reliability is high, the examination can be finished for an extremely short time, and the step of washing, drying or the like is not required also after the examination, so that there are given good economy and hygiene, and such products can be examined reliability economically.

## Claims

1. A method for examing a bag-shaped product composed of a thin type syntheric resin or rubber membrane, in which said bag-shaped product is put on a holding tool adapted to its opening portion, and attached in an air-tight manner thereto, and a gas having a pressure slightly higher than the atmospheric pressure is introduced into said product to be inflated, and leakage of said gas from said product is detected so as to sense presence or absence of pin holes, wherein an ultrasonic wave detector is provided at a position opposite to a face to be examined of said product, and presence or absence of a leaking air flow is detected.

2. A method according to claim 1, wherein the ultrasonic wave detector is an electrostritive element capable of sensing an ultrasonic wave of a frequency of 20 to 100 kHz.

3. A method according to claim 1 or 2, wherein the ultrasonic wave detector is arranged in the spouting air flow to be generated when a pin hole is present at the face to be examined.

4. An apparatus for examing a bag-shaped product composed of a thin type synthetic resin or rubber membrane to be subjected to examination for defects, said product being put on a holding tool adapted to its opening portion and attached in an air-tight manner thereto, a gas having a pressure slightly higher than the atmospheric pressure being introduced into the inside to make inflation, and its leakage being detected so as to examine presence or absence of pin holes, wherein said apparatus comprises:
a rotatable table on which a plurality of holding tools are carried;
a unit for supplying compressed air to the holding tools carried on the rotatable table;
at least one ultrasonic wave detector which is arranged opposite to a face to be examined of the product moving in accordance with rotation of the rotatable table; and
a unit for judging the product to be inadequate or inferior when the ultrasonic wave detector detects a ultrasonic wave generated from the face to be examined of the product passing through the front of it.

5. An apparatus according to claim 4 wherein the product to be examined is a rubber glove, the ultrasonic wave detectors are provided at a position opposite to the palm face, at a position opposite to the back face, and in a direction directed by fingers, and there is provided a unit for pressing the palm face and the back face when the glove to be examined arrives at front of the ultrasonic wave detector provided in the direction directed by fingers.

6. An apparatus according to claim 4 or 5 wherein the ultrasonic wave detector is an electrostrictive element capable of sensing a ultrasonic wave of a frequency of 20 to 100 kHz.
